# EUROPEAN PATENT APPLICATION

(11) **EP 4 516 442 A1**
(43) Date of publication of application: **05.03.2025**
(21) Application number: 23852500.0
(22) Date of filing: 04.08.2023
(51) Int. Cl.: B23K 26/323, B23K 26/04, B23K 26/042, B23K 26/21

(54) **LASER WELDING DEVICE, AND LASER WELDING METHOD**

(30) Priority: 08.08.2022 JP 2022126687; 07.12.2022 JP 2022195436
(71) Applicant: Okayama University, Okayama-shi, Okayama 700-8530 (JP); Kataoka Corporation, Kyoto-shi, Kyoto 601-8203 (JP)
(72) Inventor: OKAMOTO, Yasuhiro, Okayama-shi, Okayama 700-8530 (JP); NAGASAKI, Katsutoshi, Kyoto-shi, Kyoto 601-8203 (JP); YAMAMURA, Takeshi, Kyoto-shi, Kyoto 601-8203 (JP); HAYASHI, Keisuke, Kyoto-shi, Kyoto 601-8203 (JP)
(74) Representative: Seemann & Partner Patentanwälte mbB
(86) International application number: PCT/JP2023/028583
(87) International publication number: WO 2024/034535

(57) **Abstract**

A laser welding device (10) includes a support (7) that supports a base material, an irradiation unit (2) that irradiates the base material with a laser beam, and a drive mechanism (50) that moves the irradiation unit (2) relative to the base material to scan the laser beam, and the drive mechanism (50) moves the laser beam relative to the base material in a posture in which an optical axis of the laser beam is tilted backward with respect to a scanning direction.

## Description

### TECHNICAL FIELD

The present invention relates to a device and a method for laser welding two base materials of different materials or different types.

### BACKGROUND ART

A laser welding technique is known in which a welding portion is irradiated with a laser beam to heat and melt a base material, thereby welding the base material and another base material. For example, the following Patent Literature discloses that two dissimilar metal base materials, i.e., an aluminum material and a copper material, are irradiated with a laser beam from the aluminum material to be welded to each other.

### CITATION LIST

### PATENT LITERATURE

Patent Literature 1: JP2015-211981A

### SUMMARY OF INVENTION

### TECHNICAL PROBLEM

In general, in laser welding between dissimilar metal materials, since a hard and brittle intermetallic compound is often generated in a molten portion, it is known that joint strength is significantly reduced, and brittle fracture behavior occurs as compared with welding between similar metal materials.

In the laser welding between dissimilar metal materials, in a case where a laser beam is emitted to form a keyhole penetrating through two base materials of different materials or different types, a large number of intermetallic compounds that increase brittleness due to an evaporation phenomenon are generated, and the weld strength decreases. In particular, in a case where a copper material having a high melting point is superimposed on an aluminum material having a relatively low melting point, and the laser beam is emitted from the copper material to perform welding, this problem is apparent.

An object of the present invention is to reliably laser weld two base materials of different materials or different types by a simple method and improve weld strength.

### SOLUTION TO PROBLEM

The present disclosure provides a laser welding device for welding a base material by scanning a laser beam along a scanning direction, and the laser welding device includes: a support configured to support the base material; an irradiation unit configured to irradiate the base material with the laser beam; and a drive mechanism configured to move the irradiation unit relative to the base material to scan the laser beam. The drive mechanism moves the laser beam relative to the base material in a posture in which an optical axis of the laser beam is tilted backward with respect to the scanning direction.

The present disclosure is effective when a melting point of the first base material is higher than a melting point of the second base material.

A magnitude of an acute angle formed between a normal line of a surface of the first base material and the optical axis of the laser beam is set within a range of, for example, 15° to 50°.

It is preferable that a keyhole formed by radiating the laser beam does not penetrate the first base material.

The first base material is, for example, copper or an alloy containing copper, and the second base material is, for example, aluminum or an alloy containing aluminum.

A laser welding method according to the present invention is a laser welding method for welding a first base material and a second base material that overlap each other by scanning a laser beam along a scanning direction, and the laser welding method includes: performing scanning in a posture in which an optical axis of the laser beam is tilted backward with respect to the scanning direction such that a keyhole formed in the first base material during welding does not penetrate the first base material and does not reach the second base material.

### ADVANTAGEOUS EFFECTS OF INVENTION

According to the present invention, it is possible to reliably laser weld two base materials of different materials or different types by a simple method and improve weld strength.

### BRIEF DESCRIPTION OF DRAWINGS

FIG. 1 is a diagram schematically showing a configuration of a laser processing device according to an embodiment of the present invention.
FIG. 2 is a cross-sectional view schematically showing a pattern of laser welding performed by the laser processing device.
FIG. 3 is a cross-sectional view schematically showing an operation of laser welding performed by the laser processing device.
FIG. 4A is a diagram showing a relation between an angle of an optical axis of a laser beam and a laser welding result in laser welding performed by the laser processing device.
FIG. 4B is a diagram showing a relation between an angle of the optical axis of the laser beam and a laser welding result in laser welding performed by the laser processing device.
FIG. 4C is a diagram showing a relation between an angle of the optical axis of the laser beam and a laser welding result in laser welding performed by the laser processing device.
FIG. 4D is a diagram showing a relation between an angle of the optical axis of the laser beam and a laser welding result in laser welding performed by the laser processing device.
FIG. 4E is a diagram showing a relation between an angle of the optical axis of the laser beam and a laser welding result in laser welding performed by the laser processing device.
FIG. 4F is a diagram showing a relation between an angle of the optical axis of the laser beam and a laser welding result in laser welding performed by the laser processing device.
FIG. 4G is a diagram showing a relation between an angle of the optical axis of the laser beam and a laser welding result in laser welding performed by the laser processing device.
FIG. 4H is a diagram showing a relation between an angle of the optical axis of the laser beam and a laser welding result in laser welding performed by the laser processing device.
FIG. 5 is a diagram showing a relation between an angle of the optical axis of the laser beam and a laser welding result in laser welding performed by the laser processing device.
FIG. 6A is a diagram showing a relation between an angle of an optical axis of a laser beam and a laser welding result in laser welding performed by the laser processing device.
FIG. 6B is a diagram showing a relation between an angle of the optical axis of the laser beam and a laser welding result in laser welding performed by the laser processing device.
FIG. 6C is a diagram showing a relation between an angle of the optical axis of the laser beam and a laser welding result in laser welding performed by the laser processing device.
FIG. 7 is a diagram schematically showing a configuration of a laser processing device according to a modification of the present invention.
FIG. 8 is a cross-sectional view schematically showing a pattern of laser welding performed by the laser processing device according to the modification.
FIG. 9A is a diagram showing a result of laser welding performed by the laser processing device according to the modification.
FIG. 9B is a diagram showing a result of laser welding performed by the laser processing device according to the modification.
FIG. 9C is a diagram showing a result of laser welding performed by the laser processing device according to the modification.
FIG. 9D is a diagram showing a result of laser welding performed by the laser processing device according to the modification.
FIG. 9E is a diagram showing a result of laser welding performed by the laser processing device according to the modification.
FIG. 9F is a diagram showing a result of laser welding performed by the laser processing device according to the modification.
FIG. 9G is a diagram showing a result of laser welding performed by the laser processing device according to the modification.
FIG. 9H is a diagram showing a result of laser welding performed by the laser processing device according to the modification.
FIG. 9I is a diagram showing a result of laser welding performed by the laser processing device according to the modification.
FIG. 9J is a diagram showing a result of laser welding performed by the laser processing device according to the modification.
FIG. 10A is a diagram showing a result of laser welding performed by the laser processing device according to the modification.
FIG. 10B is a diagram showing a result of laser welding performed by the laser processing device according to the modification.
FIG. 11A is a diagram showing a result of laser welding performed by the laser processing device according to the modification.
FIG. 11B is a diagram showing a result of laser welding performed by the laser processing device according to the modification.
FIG. 11C is a diagram showing a result of laser welding performed by the laser processing device according to the modification.
FIG. 11D is a diagram showing a result of laser welding performed by the laser processing device according to the modification.
FIG. 11E is a diagram showing a result of laser welding performed by the laser processing device according to the modification.
FIG. 11F is a diagram showing a result of laser welding performed by the laser processing device according to the modification.
FIG. 12A is a diagram showing a result of laser welding performed by the laser processing device according to the modification.
FIG. 12B is a diagram showing a result of laser welding performed by the laser processing device according to the modification.
FIG. 13 is a perspective view showing a breaking tester for measuring joint strength between base materials welded by the laser processing device.
FIG. 14 is a cross-sectional view illustrating a problem to be solved by the present invention.

### DESCRIPTION OF EMBODIMENTS

A first embodiment of the present disclosure will be described with reference to the drawings. In a laser welding device 10 according to the present embodiment, a first base material 8, which is a thin metal plate, is superimposed on a second base material 9, which is also a thin metal plate, a surface of the first base material 8 is irradiated with a laser beam, and the first base material 8 and the second base material 9 are welded. In the following description, the first base material 8 and the second base material 9 may be collectively referred to simply as "base materials 8 and 9".

In the first embodiment, the first base material 8 is copper, and the second base material 9 is aluminum. The first base material 8 may be, for example, copper or an alloy containing copper, and the second base material 9 may be, for example, aluminum or an alloy containing aluminum. A combination of the first base material 8 and the second base material 9 is not limited to the above-described embodiment. The first base material 8 and the second base material 9 may be metals different from each other, and a melting point of the first base material 8 may be higher than a melting point of the second base material 9.

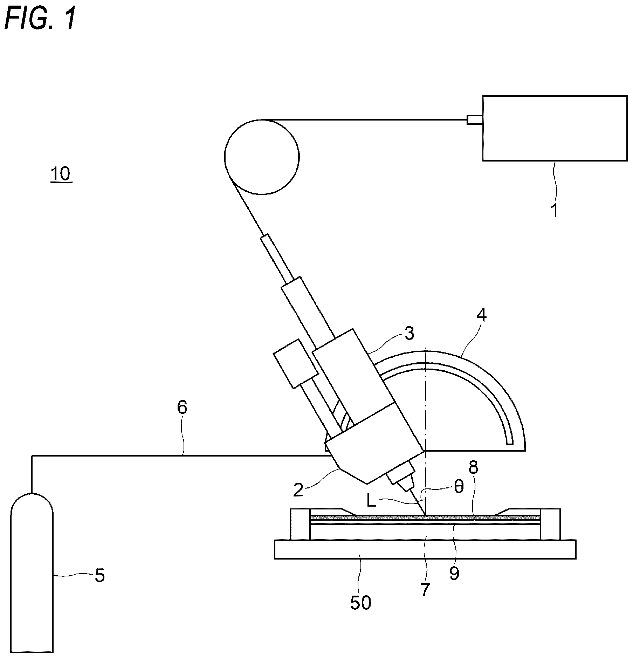

As shown in FIG. 1, the laser welding device 10 according to the present embodiment includes a laser source (oscillator) 1, a processing nozzle 2 (irradiation unit 2), a light transmission unit 3, an angle adjustment mechanism 4, a gas cylinder 5, a gas flow path 6, and a support 7.

The laser source 1 is a device that generates a laser beam. The processing nozzle 2 can radiate a laser beam L supplied from the laser source 1 to a base material to be welded. The processing nozzle 2 incorporates a light collecting lens (or an objective lens) that collects the laser beam L to be emitted to the base materials 8 and 9. An optical system of the light transmission unit 3 is configured by combining known optical elements such as an optical fiber, a mirror, and a lens. The lens is for shaping a projected shape (spot shape) of the laser beam L into a desired shape, and includes a cylindrical lens, a collimating lens, and the like. The light transmission unit 3 includes an optical system that supports the processing nozzle 2 and propagates, to the processing nozzle 2, the laser beam L output from the laser source 1.

The angle adjustment mechanism 4 can adjust postures of the light transmission unit 3 and the processing nozzle 2 with respect to the base material. The angle adjustment mechanism 4 can adjust, to a desired magnitude, an angle θ of the optical axis of the laser beam L emitted from the processing nozzle 2 with respect to a normal line to the surface of the first base material 8. That is, the angle adjustment mechanism 4 can variably adjust the angle θ at which the laser beam is incident on the base material. Although described later, in the present embodiment, θ is not 0°. That is, the optical axis of the laser beam L is not orthogonal to the surface of the first base material 8 and is inclined with respect to the surface of the first base material 8.

The gas cylinder 5 can store shielding gas and guide the shielding gas to the processing nozzle 2 through the gas flow path 6. The shielding gas supplied from the gas cylinder 5 to the processing nozzle 2 through the gas flow path 6 is for protecting molten metal so that molten metal does not react with oxygen or hydrogen in the air, and is, for example, chemically stable nitrogen or argon. The shielding gas is ejected from the processing nozzle 2 toward the surface of the first base material 8 during laser welding. The gas flow path 6 may include an easily deformable flexible tube (or hose). The support 7 supports the first base material 8 and the second base material 9.

In the laser welding device 10 according to the first embodiment, a drive mechanism 50 capable of displacing the light transmission unit 3 and the processing nozzle 2 in a predetermined direction relative to the base materials 8 and 9 to be welded is additionally provided. The drive mechanism 50 can move, in a direction parallel to the surface of the first base material 8, the support 7 that supports the base material. A specific configuration of the drive mechanism 50 is optional, and a plurality of modes are conceivable. For example, the light transmission unit 3 that supports the processing nozzle 2 may be mounted on a stage having a linear motor carriage or the like, and the light transmission unit 3 may be movable in a direction parallel to the surface of the first base material 8 by the stage.

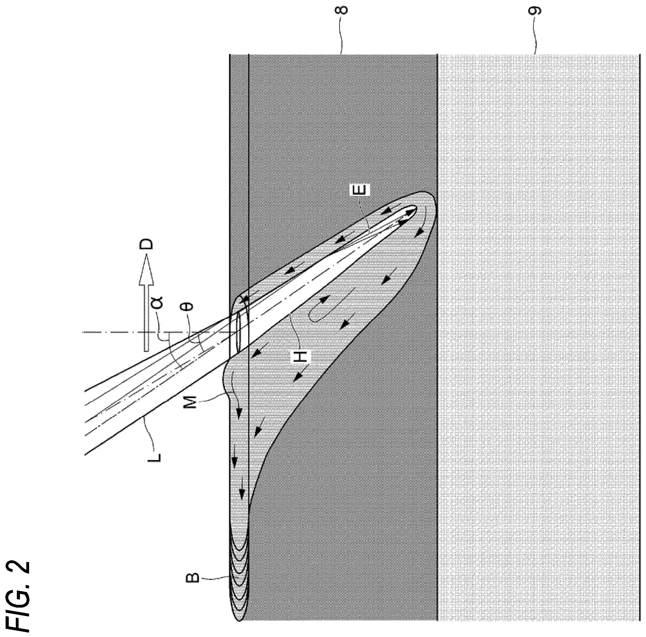

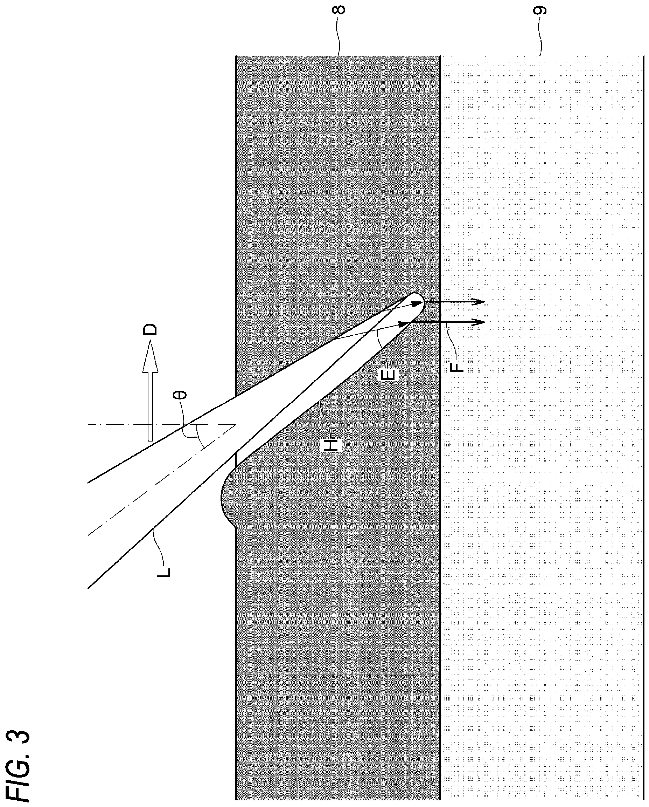

As shown in FIGS. 2 and 3, in the present embodiment, scanning is performed by moving the laser beam L relative to the first base material 8 along a scanning direction D parallel to the surface of the first base material 8 while maintaining a posture in which the optical axis of the laser beam L is tilted backward with respect to the surface of the first base material 8. In the present embodiment, as shown in FIG. 2, the optical axis of the laser beam L is inclined in a direction opposite to the scanning direction D. Here, the scanning direction D is a direction in which the processing nozzle 2 advances. In the present embodiment, a front end of the processing nozzle 2 is positioned on a front side in the scanning direction D with respect to a rear end, the processing nozzle 2 is set to a backward tilting posture in which the laser beam L from the processing nozzle 2 is emitted obliquely forward with respect to the scanning direction D, and the processing nozzle 2 is scanned with respect to the base material in this posture.

As shown in FIG. 2, although a keyhole H is formed in the first base material 8 irradiated with the laser beam L, the keyhole H does not penetrate the first base material 8 and does not penetrate the second base material 9. In the present embodiment, a wavelength of the laser beam L, an output of the laser beam L, a projected shape and size (spot diameter) on the surface of the first base material 8, a scanning speed along the scanning direction D, and the angle θ of the optical axis are set in advance to form the keyhole H in the above-described mode. All of the above affect an absorbed energy amount (energy density) per unit area of the base materials 8 and 9. The laser beam L to be emitted is, for example, a near-infrared laser, depending on the types of the base materials 8 and 9. For example, a plurality of laser beams may be used in combination, such as irradiating the first base material 8 with the laser beam L formed by superimposing a near-infrared laser and a blue laser. The laser beam L may be a continuous wave laser or a pulse laser.

Whether the keyhole H formed when the laser beam L is emitted penetrates the first base material 8 can be experimentally confirmed. For example, the first base material 8 and the second base material 9 are overlapped, or the first base material 8 alone is irradiated with the laser beam L, the molten metal and the keyhole H generated at that time are photographed by a high-speed camera capable of photographing at a high frame rate with high definition, and the photographed image (still image or moving image) is referred to for confirmation. Alternatively, after the first base material 8 alone is irradiated with the laser beam L, the first base material 8 itself may be observed to confirm that the keyhole H does not penetrate the first base material 8.

An angle θ (hereinafter, also referred to as an incident angle) at which the optical axis of the laser beam L intersects the normal line of the surface of the first base material 8 is set in a range of 15° to 50° when the angle θ at which the optical axis of the laser beam L is inclined toward a direction opposite to the scanning direction D is positive. Accordingly, the keyhole H that does not penetrate during laser welding can be formed in the first base material 8.

As shown in FIG. 2, the keyhole H formed in the first base material 8 is inclined from a rear side toward a front side along the scanning direction D as the keyhole H approaches (becomes deeper) the second base material 9. That is, the keyhole H extends at an angle different from that of the laser beam L. An angle α between the keyhole H and the normal line to the surface of the first base material 8 is larger than the angle θ between the laser beam L and the normal line of the surface of the first base material 8. A part (indicated by a long arrow in FIG. 2) of the laser beam L emitted to the first base material 8 hits a wall on a front side of the keyhole H and is estimated to be reflected downward toward the second base material 9 or toward a wall on a rear side.

Since the keyhole H does not penetrate the first base material 8, the second base material 9 is hardly or completely irradiated with the laser beam L directly. As shown in FIG. 3, the second base material 9 is melted by the conduction of the heat F generated by the first base material 8 absorbing the energy of the laser beam L. Accordingly, it is possible to reduce a region where a brittle intermetallic compound is generated at a boundary between the first base material 8 and the second base material 9.

A bottom portion of the keyhole H is not directly irradiated with the laser beam L, but is irradiated with a reflected light E of the laser beam L. Since a power density of the reflected light E is lower than a power density of the direct light (laser beam L), the bottom portion of the keyhole H can be heated at a low power density. Accordingly, even if the laser beam L having a high-power density and capable of forming the keyhole H in the first base material 8 such as copper is used, the bottom portion of the keyhole H in the first base material 8 and the second base material 9 adjacent thereto can be gently heated. By performing gentle heating at a boundary between the first base material 8 and the second base material 9 while forming the keyhole H in the first base material 8, a prominent evaporation phenomenon of the second base material 9 can be prevented, the convection between the first base material 8 and the second base material 9 is prevented in addition to the reduction of the porosities, and a brittle intermetallic compound is hardly generated.

In addition, molten metal M of the first base material 8 flows backward in the scanning direction D (indicated by short arrows in FIG. 2). Therefore, not only a state of a bead B appearing on the surface of the first base material 8 becomes good, but also a spatter becomes extremely small. Furthermore, porosities (generic terms of welding defects such as blowholes (cavities) generated in the weld metal and pits having holes up to the surface) are less likely to occur.

As described above, when an appropriate incident angle θ is provided for the optical axis of the laser beam L, a length of the molten region increases even with the same size of the keyhole H, and a good molten pool flow can be formed even with the first base material 8 having a large thermal conductivity and a large cooling rate, and a phenomenon in which the molten metal M behind the keyhole H covers and blocks the keyhole H is less likely to occur.

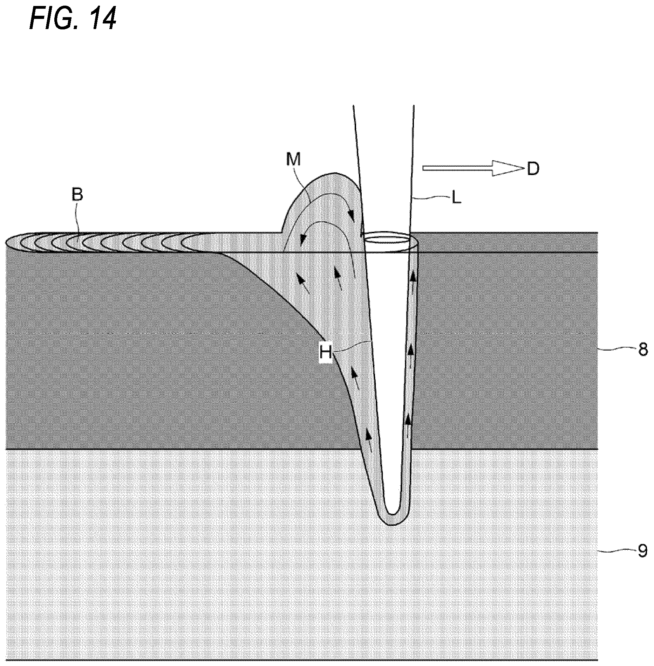

As compared with the method in the present embodiment, when the optical axis of the laser beam L is substantially perpendicular to the surface of the first base material 8, that is, the angle θ is substantially 0° as shown in FIG. 14, the keyhole H penetrates the first base material 8 and also penetrates the second base material 9, and a brittle intermetallic compound is easily generated at the boundary between the first base material 8 and the second base material 9.

In addition, since a large amount of the molten metal M flows upward (indicated by short arrows in FIG. 14), the state of the bead B appearing on the surface of the first base material 8 deteriorates, and a spatter or a porosity is likely to occur.

Hereinafter, examples of welding using the laser welding device 10 according to the present embodiment will be described. The first base material 8 to be welded is a thin plate of oxygen-free copper (C1020) having a thickness of 1.0 mm, and the second base material 9 is a thin plate of pure aluminum (A1050) having a thickness of 1.2 mm. The laser beam L to be used is a continuous wave laser having a wavelength of 1080 nm and an output of 2.5 kW. A focal length of a converging lens of the processing nozzle 2 was 200 mm, a focal point of the laser beam L was adjusted to the surface of the first base material 8, a diameter (spot diameter) of the projected shape of the laser beam L on the surface of the first base material 8 was 167 µm, and the processing nozzle 2 was linearly scanned along a predetermined direction at a speed of 180 mm per second. During the laser welding, argon gas as shielding gas was injected from a tip of the processing nozzle 2 having a diameter of 11 mm to an irradiation position of the laser beam L at a flow rate of 40 1 per minute.

In the example, the angle θ of the optical axis of the laser beam L was set to 30°. In Comparative Example 1, the angle θ of the optical axis was set to 0°. In Comparative Example 2, the angle θ of the optical axis is set to -30° (the optical axis is not tilted backward but tilted forward).

In the example, the keyhole H can be maintained relatively stably, and a melting phenomenon is stabilized. On the other hand, in Comparative Examples 1 and 2, a part of the keyhole H was covered from above while a surface of the molten metal M waviness, and a large number of spatters were scattered. It is considered that this is because a molten pool region exists only in a narrow region around and behind the keyhole H, the thermal conductivity of copper as the first base material 8 is high, and thus solidification is fast, it is difficult to secure a large molten area, and the molten metal M stays around the keyhole H.

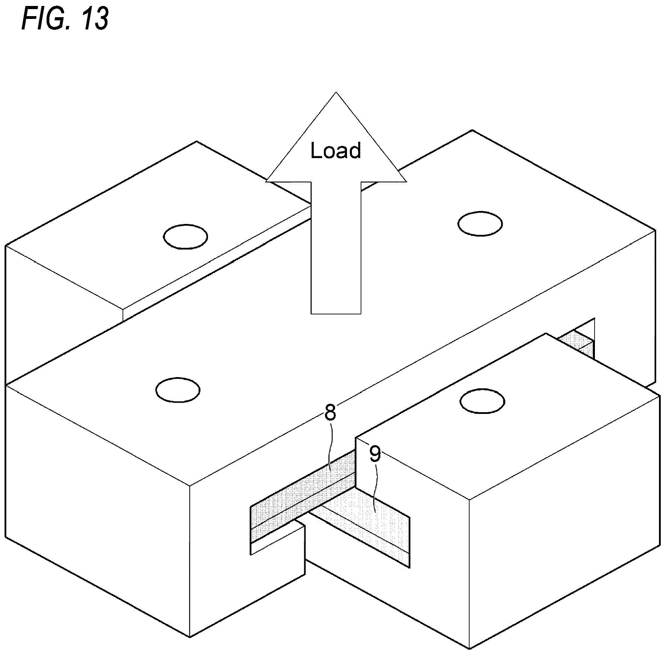

In addition, after a laser welding process, a breaking test for peeling off the first base material 8 and the second base material 9 was attempted. In the breaking test, a magnitude of a load when breakage occurs in a joint surface by welding of the base materials 8 and 9 laser welded under the respective conditions of the above-described example and Comparative Examples 1 and 2 is measured. The breaking test is performed by setting the base materials 8 and 9 in the breaking tester as shown in FIG. 13 and applying a load in a direction perpendicular to the joint surface (boundary) of the base materials 8 and 9 to peel off the first base material 8 from the second base material 9.

As the results of the breaking test, a magnitude of a load at which breakage occurs in the sample of Comparative Example 1 was about 25 MPa, a magnitude of a load at which breakage occurs in the sample of Comparative Example 2 was about 12 MPa, and a magnitude of a load at which breakage occurs in the sample of the example was about 30 MPa. In the example, compared with Comparative Example 1, a magnitude of a load at which breakage occurs in the base materials 8 and 9 is increased by about 20%. That is, in the example, the welding strength was clearly improved as compared with Comparative Example 1. In Comparative Example 2, compared with Comparative Example 1, a magnitude of a load at which breakage occurs in the base materials 8 and 9 was significantly reduced.

In Comparative Examples 1 and 2, many brittle intermetallic compounds CuAl₂ having a high aluminum content are present at the boundary between the base materials 8 and 9, and a lot of porosities, which are welding defects, are generated and the joining strength is weak. On the other hand, in the example, penetration depths of the base materials 8 and 9 are stable, and many intermetallic compounds Cu₉Al₄ having a high copper content are present at the boundary between the base materials 8 and 9, welding defects are small, and the joining strength is increased.

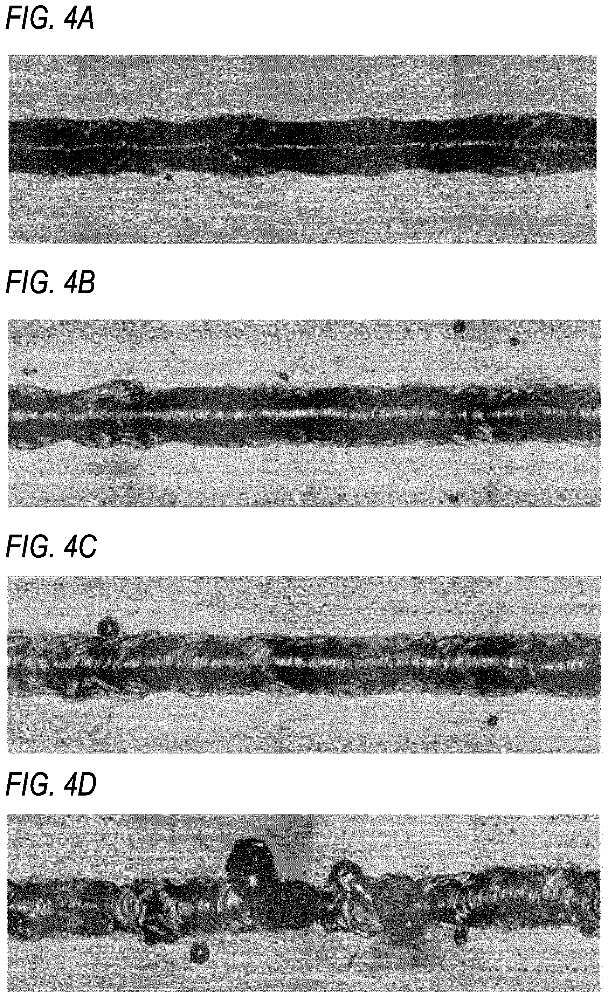

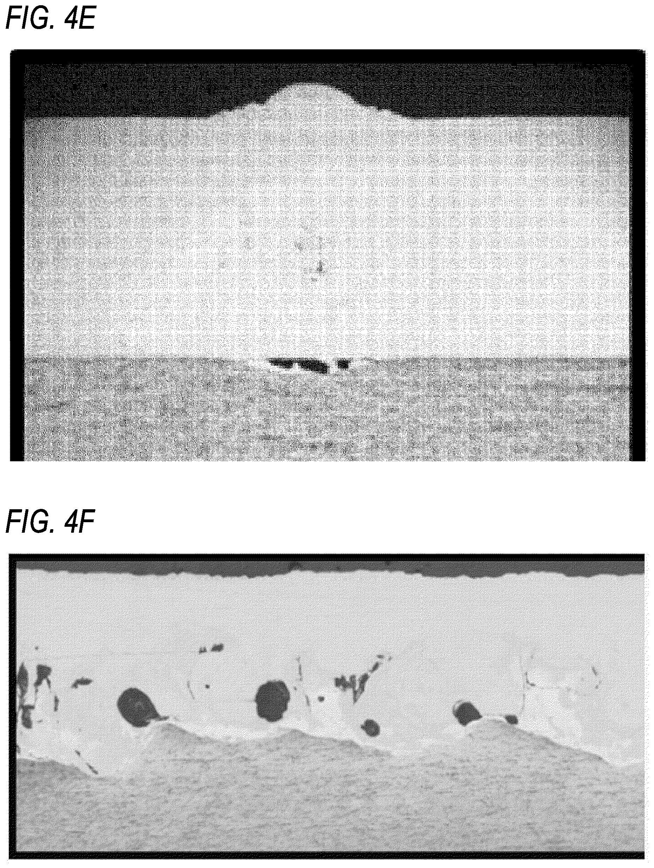

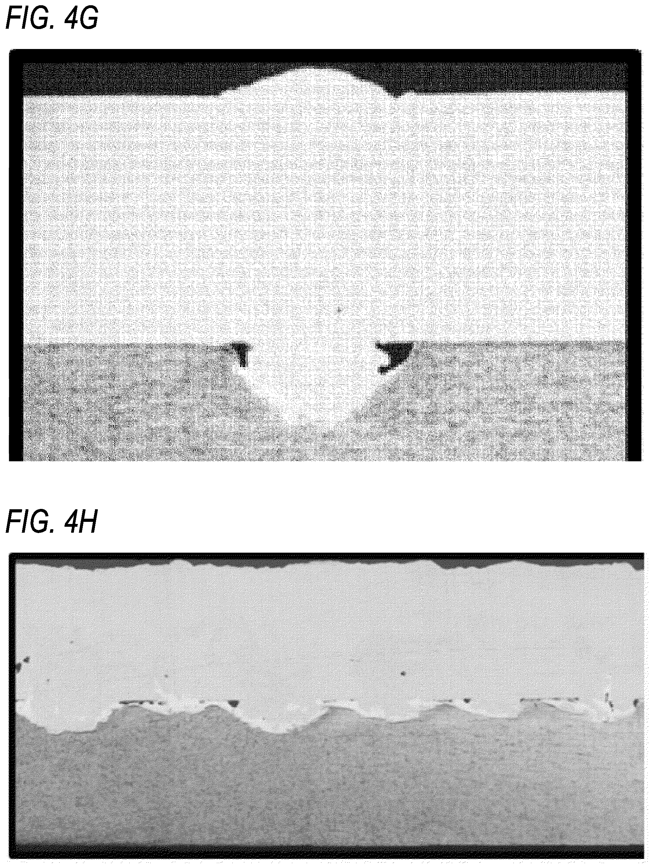

FIGS. 4A to 4H are cross-sectional photographs of samples in which the angle θ of the optical axis of the laser beam L is set to a plurality of angles in a positive value range and the laser welding process is performed under the set angle θᵢ. The angle θᵢ is set to 0° in FIG. 4A, 15° in FIG. 4B, 30° in FIG. 4C, and 45° in FIG. 4D. Further, in FIGS. 4A to 4D, the welding is performed from the left to the right of the drawing. Due to the magnitude of the angle θᵢ of the optical axis of the laser beam L, a difference occurs in the result. When θᵢ = about 15°, a corresponding effect is obtained, and there is no large change in the bead B as compared with the vertical irradiation of θᵢ = 0°. On the other hand, when θᵢ = 45° or more, the surface of the bead B becomes unstable. The surface of the bead B when θᵢ = 30° is better than or equal to the surface of the bead B under the condition of θᵢ = 0° to 15°. FIGS. 4E and 4F are cross-sectional photographs when the angle θᵢ is 15°, and FIGS. 4G and 4H are cross-sectional photographs when the angle θᵢ is 30°. From these cross-sectional photographs, it can be said that welding having an extremely low porosity is also realized at θᵢ = 30°.

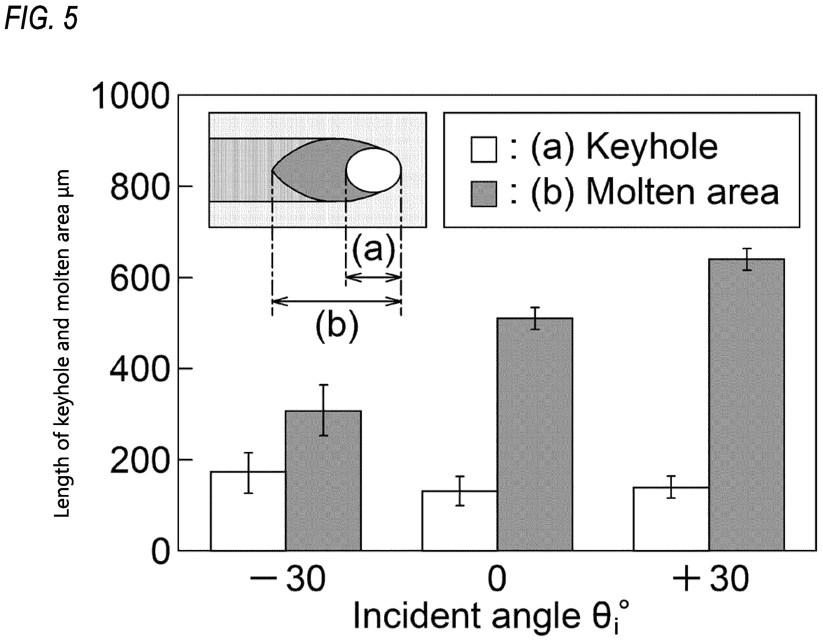

In FIG. 5, the angle θᵢ of the optical axis is set to a plurality of angles (specifically, - 30°, 0°, and 30°), and a magnitude (inner diameter, (a)) of the keyhole H appearing on the surface of the first base material 8 and a melting range (dimension along the scanning direction D of the laser beam L, (b)) of the first base material 8 during the welding are measured in a case where the laser welding process is tried under the angle θᵢ. Even if the angle θᵢ is changed, the magnitude of the keyhole H on the first base material 8 is not enlarged or reduced to that extent. However, when the angle θᵢ is set to an appropriate angle (for example, 30°), even if the keyhole H has the same magnitude, the melting range of the first base material 8 is enlarged compared to a case where the angle θᵢ is 0°. Accordingly, even when the first base material 8 is, for example, a base material such as copper having a high thermal conductivity and a high cooling rate, a good molten pool flow can be formed, and a phenomenon in which the molten metal behind the keyhole H rises to cover the keyhole H and blocks the keyhole H is less likely to occur.

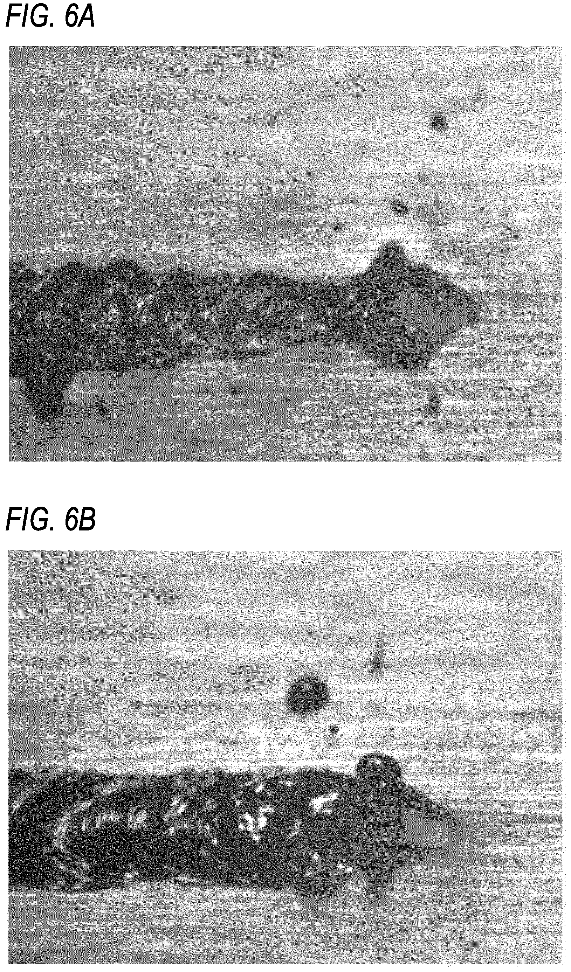

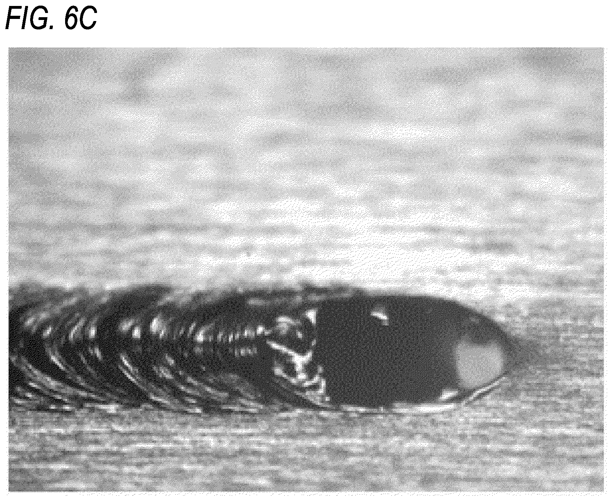

In FIGS. 6A to 6C, the angle θᵢ of the optical axis is set to a plurality of angles, and an actual welding portion on the first base material 8 during laser welding performed at the angle θᵢ is photographed by a high-speed camera. The angle θᵢ is set to -30° in FIG. 6A, 0° in FIG. 6B, and 30° in FIG. 6C. The number of spatters was 51 under a condition of θᵢ = -30° shown in FIG. 6A, the number of spatters was 21 under a condition of θᵢ = 0° shown in FIG. 6B, and the number of spatters was 2 under a condition of θᵢ = 30° shown in FIG. 6C. Thus, in the case of θᵢ = 30°, compared to the case of θᵢ = -30° to 0°, the scattering of spatters was small, and the effect of making the finished welding surface clear was also observed.

According to the present embodiment, the inclined keyhole H that does not reach the second base material 9 is formed in the first base material 8 by the laser beam L emitted to the first base material 8, the evaporation phenomenon in the second base material 9 having a low melting point is prevented without directly irradiating the second base material 9 with the laser beam L, and the melting of the second base material 9 due to gentle and highly efficient heat conduction can be caused. Accordingly, the generation of brittle intermetallic compounds is prevented, and welding can be performed with high joining strength and without brittleness. Originally, in the irradiation of the laser beam L from the first base material 8 side having a high melting point, control for heat is difficult, and a stable welding process is not easy, but in the present embodiment, reliable laser welding can be performed.

A molten region extending backward in the scanning direction D is generated in the first base material 8, a good molten metal flow occurs, and a phenomenon in which the keyhole H covers the molten metal behind the keyhole H is less likely to occur. This means that the energy of the laser beam L can be continuously and stably injected into the keyhole H.

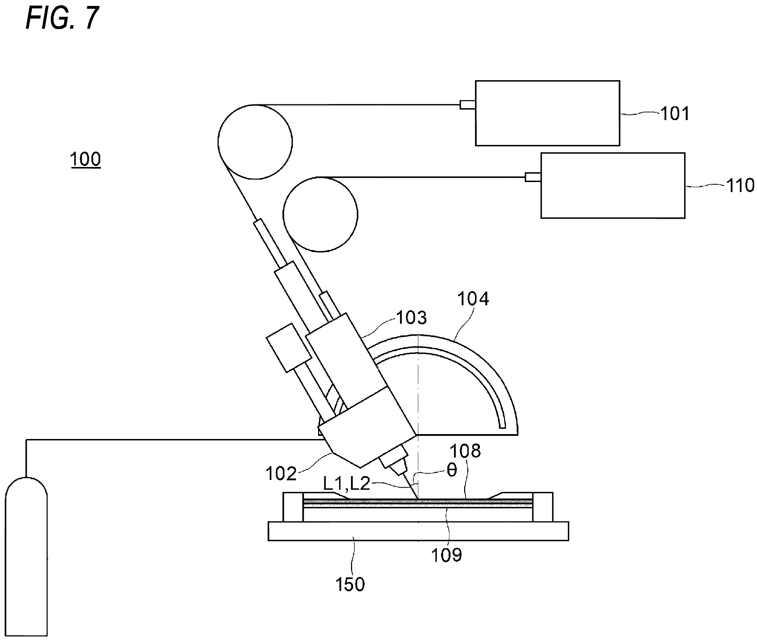

Next, a second embodiment of the laser welding device according to the present disclosure will be described. A laser welding device 100 according to the second embodiment can weld a first base material 108 and a second base material 109. As shown in FIG. 7, the laser welding device 100 includes a first laser source 101 (oscillator), a second laser source 110, a processing nozzle 102 (irradiation unit 102), a light transmission unit 103, an angle adjustment mechanism 104, and a drive mechanism 150. In the second embodiment, the first base material 108 is copper, and the second base material 109 is aluminum. The first base material 108 may be, for example, copper or an alloy containing copper, and the second base material 109 may be, for example, aluminum or an alloy containing aluminum. A combination of the first base material 108 and the second base material 109 is not limited to the above-described embodiment. The first base material 108 and the second base material 109 may be metals different from each other, and a melting point of the first base material 108 may be higher than a melting point of the second base material 109.

The first laser source 101 can emit a first laser beam L1, and the second laser source 110 can emit a second laser beam L2. The first laser source 101 outputs a near-infrared laser as the first laser beam L1. The second laser source 110 outputs a blue laser as the second laser beam L2. The second laser beam L2 is more easily absorbed by the first base material 108 than the first laser beam L1. The laser beam emitted by the first laser source 101 and the second laser source 110 is not limited to the embodiments described above. For example, the first laser beam L1 and the second laser beam L2 may be continuous wave lasers or pulse lasers. In the following description, the first laser beam L1 and the second laser beam L2 may be collectively referred to simply as "laser beams L1 and L2".

The processing nozzle 102 superimposes the first laser beam L1 and the second laser beam L2 on the first base material 108 and the second base material 109 and then irradiates the first base material 108 with the superimposed laser beam. The light transmission unit 103 includes an optical system in which the first laser beam L1 and the second laser beam L2 are superimposed and propagated to the processing nozzle 102, and supports the processing nozzle 102. Other configurations of the laser welding device 100 are the same as those of the laser welding device 10 according to the first embodiment.

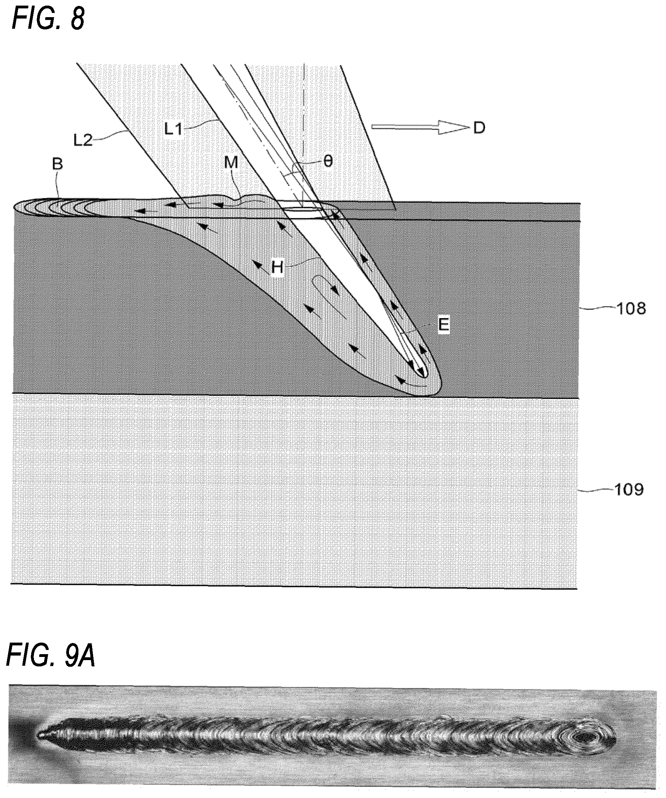

As shown in FIG. 8, in the second embodiment, scanning is performed by moving the laser beams L1 and L2 relative to the first base material 108 in a predetermined direction, that is, along the scanning direction D parallel to the surface of the first base material 108 while maintaining a posture in which the optical axes of the superimposed laser beams L1 and L2 are tilted backward with respect to the surface of the first base material 108. As for dimensions (spot diameters) of projected shapes of the laser beams L1 and L2 emitted on the surface of the first base material 108, the dimension of the projected shape of the first laser beam L1 that is less likely to be absorbed by the first base material 108 is smaller, and the dimension of the projected shape of the second laser beam L2 that is more likely to be absorbed by the first base material 108 is larger than that of the first laser beam L1. In other words, the projected shape of the first laser beam L1 on the surface of the first base material 108 is within the projected shape of the laser beam L2. Accordingly, after the first base material 108 is preheated by the second laser beam L2, the keyhole H is formed in the first base material 108 by the first laser beam L1, and the welding of both the base materials 108 and 109 can be completed.

Although the keyhole H is formed in the first base material 108 irradiated with the laser beams L1 and L2, the keyhole H does not penetrate the first base material 108 and does not penetrate the second base material 109. Thus, wavelengths of the laser beams L1 and L2, outputs of the laser beams L1 and L2, a projected shape and size (spot diameter) on the surface of the first base material 108, a scanning speed along the scanning direction D, and the angle θ of the optical axis are set in advance. All of the above affect an absorbed energy amount (energy density) per unit area of the base material.

The angle θ of the optical axis at the time of superimposing the second laser beam L2 on the first laser beam L1 and irradiating the first base material 108 can be set to be larger than the angle θ of the optical axis at the time of irradiating the first base material 108 with only the laser beam L as in the first embodiment. However, it is particularly preferable to set the angle θ to about 30°.

A temperature of a portion where the keyhole H is formed by the first laser beam L1 is higher than the boiling point of the first base material 108. When the first base material 108 is irradiated with only the first laser beam L1, a temperature of the keyhole H in the first base material 108 is very high, but a temperature of a portion around the keyhole H is low, and a temperature difference between the two is increased. A molten flow of the metal occurs according to a temperature gradient in the molten region, but when the temperature difference is large, the molten metal is solidified in an extremely short time, and thus pulsation occurs on a surface of the molten region, and spatter, disturbance of the bead B, covering of the molten metal on the keyhole H, and the like occur.

In the laser welding device according to the present disclosure, the irradiation unit may be capable of emitting, as a laser beam, the first laser beam and a second laser beam different from the first laser beam, and the second laser beam may be emitted around an irradiation range of the first laser beam. In the laser welding device 100 according to the second embodiment, the processing nozzle 102 superimposes the first laser beam L1 and the second laser beam L2 that is more easily absorbed by the first base material 108 than the first laser beam L1, and irradiates the first base material 108. Accordingly, it is possible to assist absorption of the first laser beam L1, maintain the periphery of the keyhole H at a high temperature, and expand a region where the metal is melted. At the same time, since the molten metal is solidified over a longer time, a surface of the molten region of the first base material 108 is stabilized without pulsation. Accordingly, the scattering and the covering of the keyhole H with the molten metal can be prevented.

A welding region generated behind the keyhole H along the scanning direction D (direction in which the welding proceeds) of the laser beams L1 and L2 expands, and a more stable molten pool flow can be obtained. Therefore, a phenomenon in which the molten metal behind the keyhole H covers and closes the keyhole H is less likely to occur. This also means that an amount of energy introduced into the keyhole H is stabilized. By stabilizing an amount of energy introduced into the keyhole H, an amount of heat transferred from the first base material 108 to the second base material 109 is also stabilized, and stable welding in which the penetration depth is kept constant in a wide range is possible.

Since the amount of energy introduced into the keyhole H is stable and a uniform penetration depth can be obtained, for example, when the first base material 108 is copper and the second base material 109 is aluminum as in the present embodiment, rapid melting of the aluminum material is unlikely to occur. Therefore, welding with less welding defects such as brittle intermetallic compounds represented by CuAl₂ and porosity is achieved, and a stronger welded joint can be obtained.

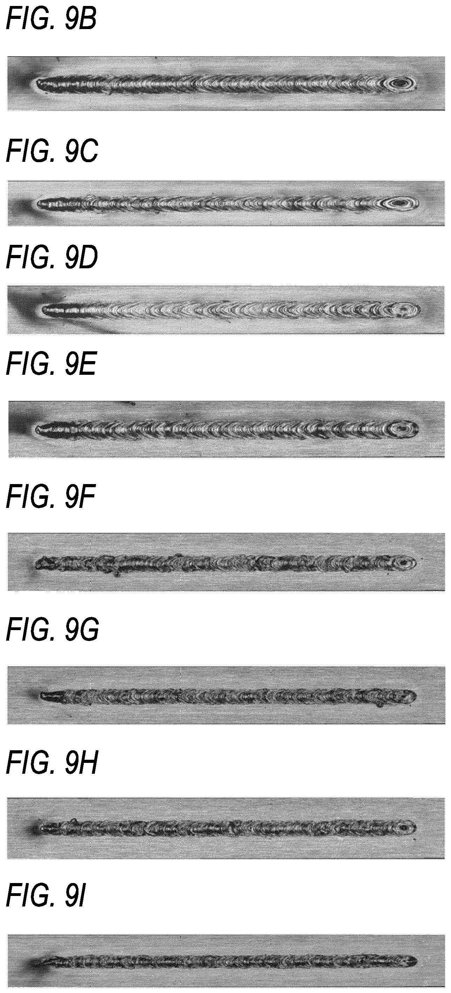

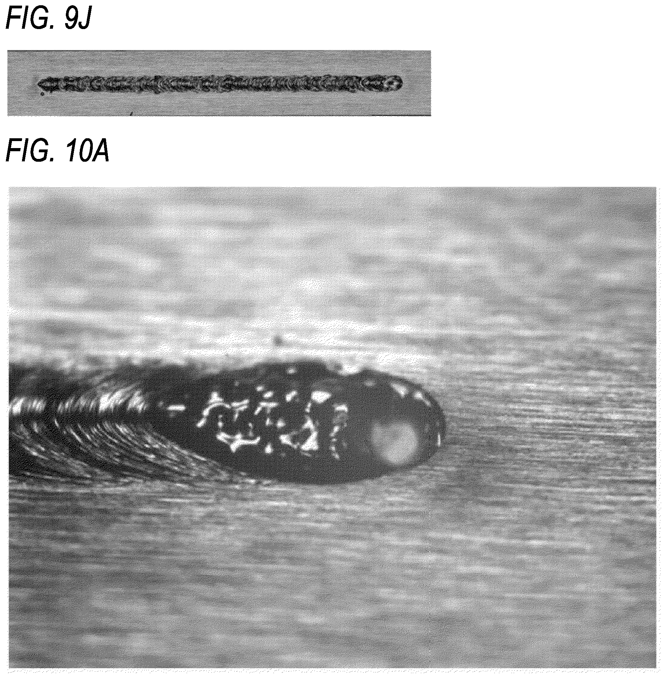

FIGS. 9A to 9E are photographs of results obtained by superimposing the second laser beam L2 on the first laser beam L1 and irradiating the first base material 108 and performing welding, and FIGS. 9F to 9J are photographs of results obtained by irradiating the first base material 108 with only the first laser beam L1 and performing welding. In any of the drawings, welding is performed from left to right in the drawing. A welding speed is 210 mm per second in the example shown in FIGS. 9A and 9F, 220 mm per second in the example shown in FIGS. 9B and 9G, 230 mm per second in the example shown in FIGS. 9C and 9H, 240 mm per second in the example shown in FIGS. 9D and 9I, and 250 mm per second in the example shown in FIGS. 9E and 9J. As shown in FIGS. 9A to 9E, when the laser welding process is tried using the first laser beam L1 and the second laser beam L2 superimposed on each other, the bead B of the molten metal appearing on the surface of the first base material 108 cleanly flows backward along the scanning direction D of the laser beams L1 and L2 to form a V shape. FIG. 9F to FIG. 9J show the results obtained by performing the laser welding process using only the first laser beam L1, but a shape of the bead B of the molten metal is not a V shape.

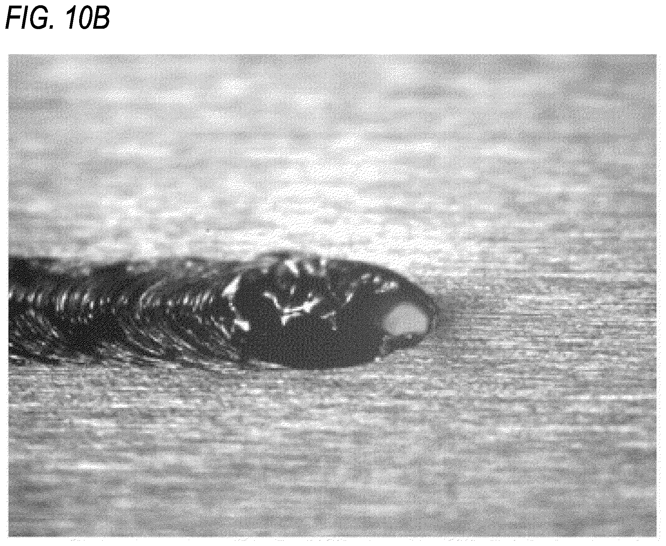

In FIG. 10A, a welding portion during welding performed by superimposing the second laser beam L2 on the first laser beam L1 and irradiating the first base material 108 is photographed by a high-speed camera. In FIG. 10B, a welding portion during welding performed by irradiating the first base material 108 with only the first laser beam L1 is photographed by a high-speed camera. As shown in FIG. 10A, by superimposing the second laser beam L2 on the first laser beam L1 and irradiating the base material, an enlargement of the molten region behind the keyhole H on the first base material 108 is recognized, and the surface of the molten region is also gentle. Further, it can be seen that the molten metal is raised and does not cover the keyhole H during laser welding, and a shape of the keyhole H is clearly maintained.

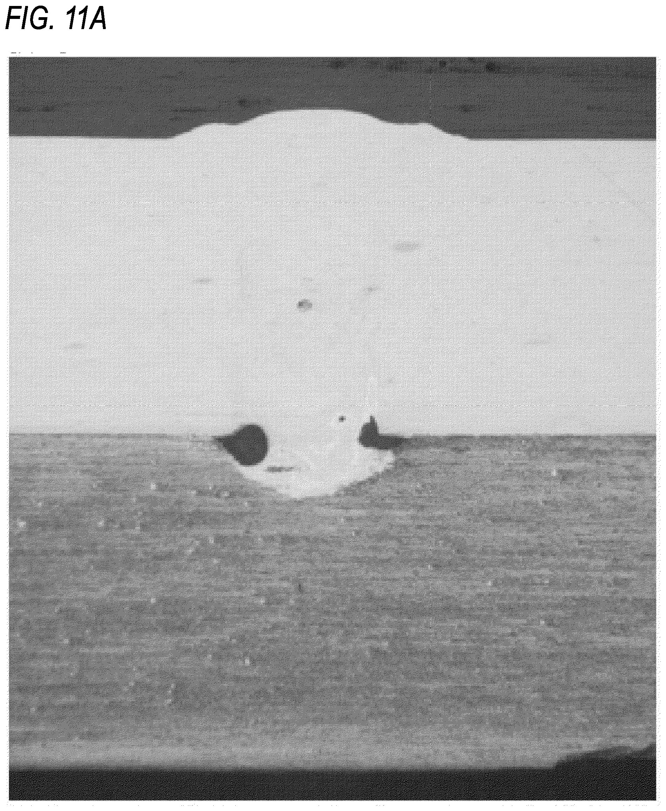

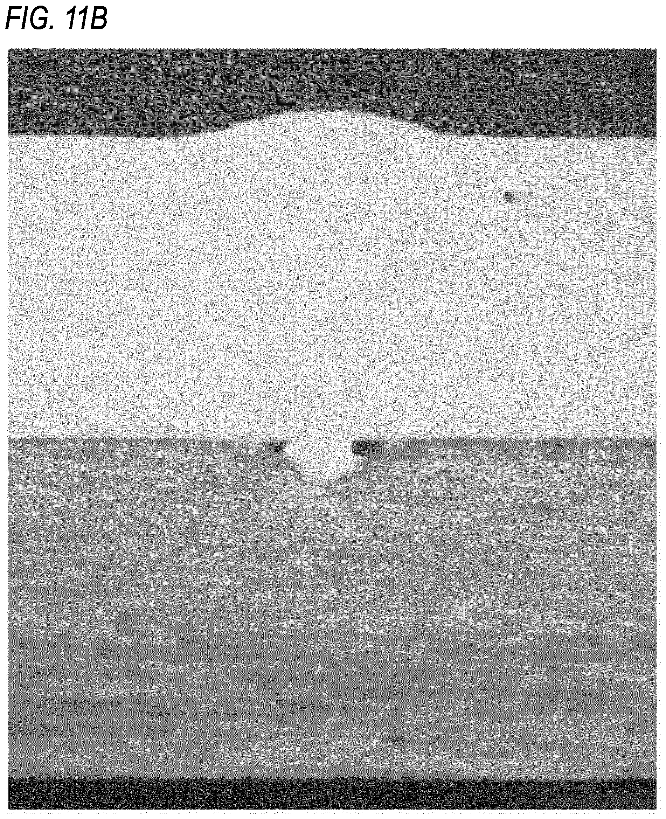

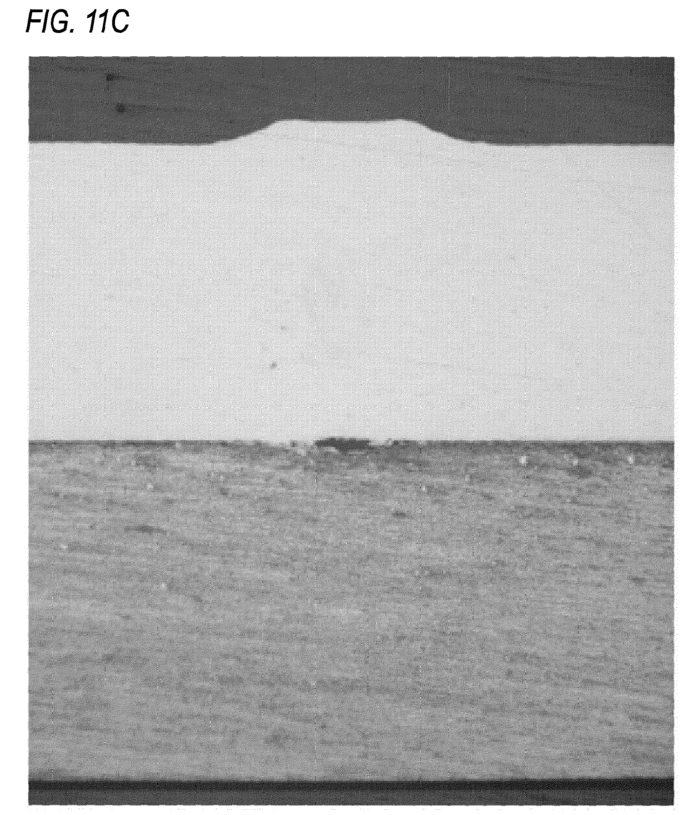

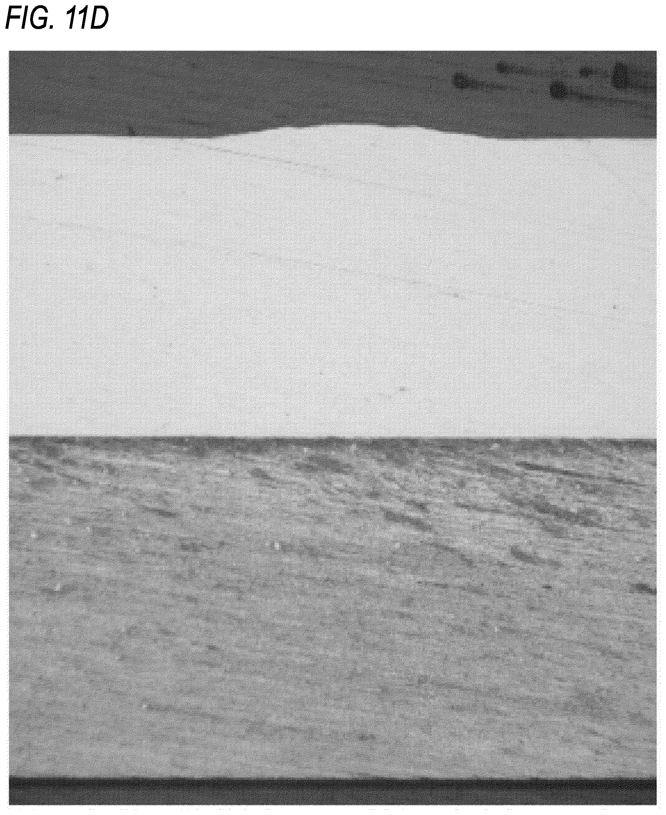

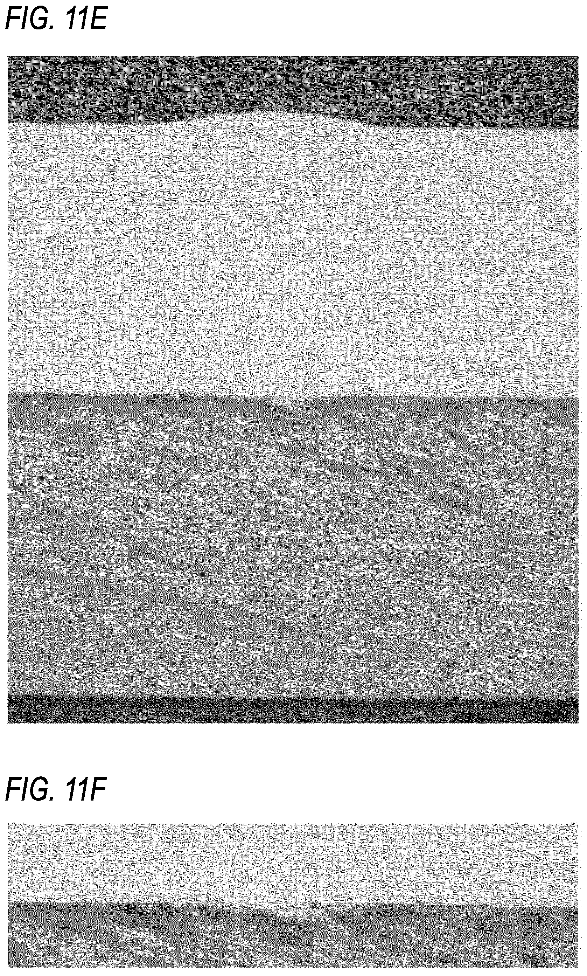

FIGS. 11A to 11F are photographs of a joint between the first base material 108 and the second base material 109 obtained as a result of superimposing the second laser beam L2 on the first laser beam L1, irradiating the first base material 108, and performing welding. FIGS. 11A to 11F are cross sections of the first base material 108 and the second base material 109 taken along a plane orthogonal to the scanning direction D of the laser beams L1 and L2. A scanning speed of the laser beams L1 and L2 with respect to the base material is set to 210 mm per second in FIG. 11A, 220 mm per second in FIG. 11B, 230 mm per second in FIG. 11C, 240 mm per second in FIG. 11D, and 250 mm per second in FIG. 11E, and the laser welding process is performed. FIG. 11F is an enlarged cross-sectional view of FIG. 11D. It can be seen from FIGS. 11C, 11D, and 11F that although a welding depth of the first base material 108 reaches a boundary between the first base material 108 and the second base material 109, the second base material 109 is not melted over a wide width, and the penetration depth is stable. According to the configuration of the present disclosure, the second base material 109 is melted not by directly irradiating the second base material 109 with the first laser beam L1 itself, but the second base material 109 is melted by melting the first base material 108 and conducting the heat to the second base material 109. Therefore, the generation of a brittle intermetallic compound can be prevented, and melt defects are also reduced.

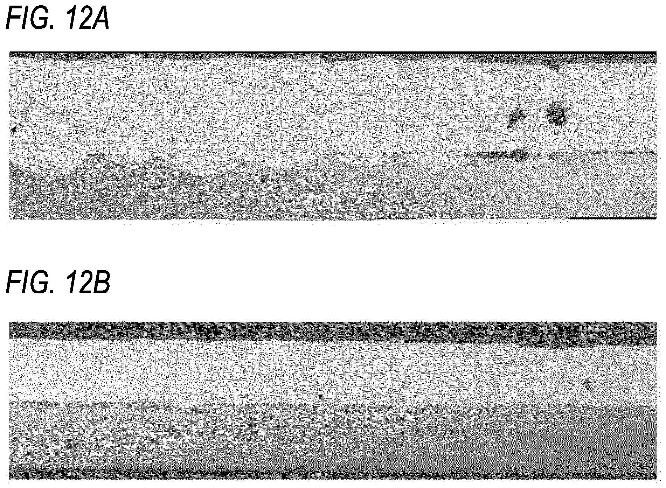

FIGS. 12A and 12B are also photographs of a joint of both base materials obtained as a result of laser welding. FIGS. 12A and 12B are cross sections of the first base material 108 and the second base material 109 taken along the plane parallel to the scanning direction D of the laser beams L1 and L2. FIG. 12A shows that welding is performed by irradiating the first base material 108 with only the first laser beam L1 at the angle θ = - 30°, and FIG. 12B shows that welding is performed by superimposing the first laser beam L1 and the second laser beam L2 and irradiating the first base material 108. In FIG. 12B, a state in which the second base material 109 is melted is observed, and the penetration depth can be kept constant in a wide range. On the other hand, in FIG. 12A, the first base material 108 is melted to penetrate the second base material 109, and an intermetallic compound CuAl₂ having low breaking strength is generated up to the inside of the first base material 108. Although porosities are also generated, it can be seen that the welding using the first laser beam L1 and the second laser beam L2 shown in a photograph in the lower part generates less CuAl₂, compared to the welding using the first laser beam L1 alone shown in a photograph in the upper part.

In addition, the specific configuration of each unit, the procedure of processing, and the like can be variously modified without departing from the gist of the present invention.

The present application is based on JP2022-126687A filed on August, 8 in 2022 and JP2022-195436A filed on December, 7 in 2022, and the contents thereof are incorporated herein by reference.

## Claims

1. A laser welding device for welding a base material by scanning a laser beam along a scanning direction, the laser welding device comprising:
a support configured to support the base material;
an irradiation unit configured to irradiate the base material with the laser beam; and
a drive mechanism configured to move the irradiation unit relative to the base material to scan the laser beam,
wherein the drive mechanism moves the laser beam relative to the base material in a posture in which an optical axis of the laser beam is tilted backward with respect to the scanning direction.

2. The laser welding device according to claim 1,
wherein the irradiation unit includes an angle adjustment mechanism that adjusts an angle of the optical axis of the laser beam.

3. The laser welding device according to claim 1 or 2,
wherein the base material includes a first base material irradiated with the laser beam and a second base material,
wherein the second base material is provided on a surface opposite to a surface of the first base material irradiated with the laser beam, and
wherein the first base material has a melting point higher than a melting point of the second base material.

4. The laser welding device according to claim 3,
wherein a magnitude of an acute angle formed between a normal line of a surface of the first base material and the optical axis of the laser beam is within a range of 15° to 50°.

5. The laser welding device according to claim 3,
wherein the first base material is copper or an alloy containing copper, and the second base material is aluminum or an alloy containing aluminum.

6. The laser welding device according to claim 1 or 2,
wherein the irradiation unit is configured to emit a first laser beam and a second laser beam different from the first laser beam as the laser beam, and
wherein the second laser beam is emitted around an irradiation range of the first laser beam.

7. A laser welding method for welding a first base material and a second base material that overlap each other by scanning a laser beam along a scanning direction, the laser welding method comprising:
performing scanning in a posture in which an optical axis of the laser beam is tilted backward with respect to the scanning direction such that a keyhole formed in the first base material during welding does not penetrate the first base material and does not reach the second base material.
